# EUROPEAN PATENT SPECIFICATION

(11) **EP 2 430 477 B1**
(45) Date of publication and mention of the grant of the patent: **25.12.2013**
(21) Application number: 10723788.5
(22) Date of filing: 10.05.2010
(51) Int. Cl.: G01V 1/20, G01V 1/38

(54) **IMMERSION CONTROL METHOD AND APPARATUS FOR A STATIONARY SEISMIC STREAMER**
IMMERSIONSSTEUERVERFAHREN UND VORRICHTUNG FÜR EINEN STATIONÄREN SEISMISCHEN STREAMER
PROCÉDE ET DISPOSITIF DE CONTRÔLE EN IMMERSION POUR FLÛTE SISMIQUE STATIONNAIRE

(30) Priority: 11.05.2009 FR 0953103
(43) Date of publication of application: 21.03.2012
(73) Proprietor: Kietta, 75008 Paris (FR)
(72) Inventor: LE PAGE, Yann, F-13013 Marseille (FR); THOMAS, Hubert, F-13100 Le Tholonet (FR)
(74) Representative: Hirsch & Associés
(86) International application number: PCT/IB2010/052050
(87) International publication number: WO 2010/131183

(56) References cited:
- WO-A1-99/01338
- US-A- 3 359 536
- US-A- 3 436 776
- US-A- 4 745 583
- US-B1- 7 112 111
- GIJS J.O. VERMEER: "Streamers versus stationary receivers" OFFSHORE TECHNOLOGY CONFERENCE, OTC 8314, 5 May 1997 (1997-05-05), XP002564748 Housten,Texas

## Description

### BACKGROUND OF THE INVENTION

The present invention relates to the general field of seismic streamers and, more particularly, to apparatus for controlling modification and maintaining of their depth of immersion.

Currently, seismic streamers operate dynamically, in other words they are drawn by a vessel which also carries the sonic source making it possible to generate the wave which will then be observed using the streamers being drawn.

With this principle or operation, seismic streamer immersion is modified and maintained thanks to the movement of these streamers using movable fins located along each streamer and making it possible to control the movement thereof, notably in the vertical direction. This is for example described in French patent 2,870,509 or yet again in European patent EP 0,884,607.

Also known are documents WO 99/01338 A1 and US 4 745 583 A.

Document WO 99/01338 A1 discloses a depth control device for a submersible body, the device comprising depth monitoring means and depth control means; wherein the depth control means comprises a controller and a variable volume buoyant body; the buoyant body comprising a first chamber containing a first compressible fluid and second and third chambers in communicating relationship with one another containing a second fluid, less susceptible to compression than the first; whereby a piston at the entrance to the first chamber is displaced in response to movement of the second fluid between the second and third chambers such that the volume of the buoyant body is varied; and wherein a depth trigger value is set in the depth control means such that the controller initiates a reversible change in the volume of the buoyant body in response to a change in depth sensed by the depth monitoring means, whereby the depth of the submersible body is maintained at substantially the depth trigger value.

Document US 4 745 583 A discloses a marine cable system, including: a cable having an outer skin impervious to fluid flow and enclosing at least two elongated cable sections that are connected end-to-end, each section including an elongated bladder whose volume varies in response to variations in the amount of fluid within the bladder in such a manner that the density of each section may be controlled by varying the amount of fluid in the bladder; and a pump disposed between each two adjacent sections, each said pump being capable of transferring fluid between the bladders in the adjacent sections in response to control signals.

Undersea seismic investigation studies consequently currently require the presence, on the spot, of a ship specifically dedicated to drawing seismic streamers. Such a vessel represents considerable added value since it must provide significant tractional power and components for rendering it integral with the streamers in addition to the sonic source. The requirement to employ such a ship constitutes a very high bottom-line expense in measurement studies.

Where the speed of the ship is reduced, such systems become ineffective since the force generated is directly proportional to the square of displacement speed. Thus, when such vessels slow down, for example due to a technical problem, the streamers become uncontrollable.

The invention sets out in particular to provide seismic streamers with robust apparatus making it possible to control their immersion and their positioning, including at very low speed. Further, the invention sets out more particularly to free seismic studies from the necessity of chartering a specific vessel for the study.

### SUMMARY OF THE INVENTION

The present invention as defined in claim 1 and claim 13 consequently has the principal aim of avoiding the drawbacks of known systems by proposing the implementation of seismic streamers fitted with an immersion controlling device suitable for modifying and maintaining their immersion for stationary use of the immersion streamer.

To achieve this aim, the invention provides apparatus for seismic streamer control in immersion adapted to modify and maintain immersion depth of the streamer, wherein, with the streamer being designed for stationary use and including a power supply network, the immersion control apparatus comprises a plurality of variable buoyancy ballasts connected to the power supply network of the streamer and installed at regular intervals along the seismic streamer and each associated with a microcontroller, a plurality of pressure sensors also installed at regular intervals along the streamer, at least one receiver for one or more desired value instructions, a bus for distributing the one or more desired value instructions to the ballasts, the microcontroller associated with a given ballasts being adapted to receive at least signals originating from at least one pressure sensor located in the proximity of the ballast and instruction signals originating from the receiver for one or more instructions, being adapted to calculate a control signal for modifying the buoyancy of the ballast as a function of at least the signals received and being adapted to send this control signal at the least to the corresponding ballast.

By definition, ballasts are reserve vessels or tanks designed for marine or sub-marine use for modifying and controlling immersion or balance of a vessel. According to the invention, the ballasts are regularly distributed along the seismic streamer along with the pressure sensors.

The pressure sensors make it possible to know locally the actual immersion depth of the seismic streamer. This item of data is then employed by the microcontroller for calculating a desired value to be sent to at least one neighboring ballast in order to vary the buoyancy thereof so that the streamer stabilizes at the desired depth of immersion.

Implementation of the distribution bus is easy since the streamer constitutes a longitudinal extending carrier. The presence of this bus makes it possible to distribute the one or more desired values to the various ballasts of the streamer controlling immersion thereof.

The invention does not require any movement of the streamer in its longitudinal direction. In this manner, the invention makes it possible for the streamer to operate under stationary conditions. This enables measurement surveys or studies to be performed without the need to have a highly specialized ship present on the spot.

The steps in a study or survey are as follows: a set of streamers is installed at the site using a specific vessel which can then leave the site to go and install further streamers at other places, the position of the streamers is controlled automatically, streamer immersion is controlled, a vessel supporting a sonic source is brought and measurements are performed. The invention thus makes it possible to employ less specific vessels. According to an advantageous characteristic, a pressure sensor is installed at each ballast.

Such an implementation makes it possible to simultaneously install the ballast and its controls, and the pressure sensors. To carry out the invention, one or more pressure sensors may be located in the proximity of each ballast be linked to the latter so that the ballast can be aware of the immersion depth. This implementation is the most simple, as it avoids multiplying the points of installation of the equipment necessary to the invention on the seismic streamer.

Similarly and advantageously, a microcontroller is incorporated at each ballast.

Advantageously, the instruction receiver includes at least one radio receiver carried by a buoy and linked to the distribution bus.

The use of such a surface radio receiver makes it possible for the vessel carrying the sonic source installed in the proximity of the seismic streamers to send desired depth instructions to the seismic streamer and consequently to the ballasts. Here again, the simplicity of implementation of measurement using the invention and, consequently, its value from a practical point of view will be seen.

According to an example, but not the invention, ballast buoyancy modification is achieved by varying a mass at constant volume.

This example consists in using seawater to vary the mass of this ballast's volume.

In practice, according to one particular example, but not the invention, each ballast comprises a constant volume tank divided into two chambers, one chamber being filled with a compressible gas and the other chamber being in communication with water external of the tank, and includes a mechanism for varying the relative volumes of the two chambers.

With this characteristic, seawater enters and exits from the volume constituted by the ballast. Modification of relative volume is advantageously achieved using a motor-driven piston. It is also possible to provide a movable wall which is flexible or in the form of a piston, driven via a pump which pumps seawater from outside into the inside and vice-versa when the ballast is operating, entry and exit of water causing displacement of the tank wall.

Nevertheless, seawater entering into the volume of the ballast and at the piston creates a corrosive environment giving rise to fears of unmanageable internal corrosion effects in such a ballast. Such a solution will only be implemented in those contexts where duration of use is limited or under environmental conditions where corrosion is mastered.

In the invention, ballast buoyancy modification is achieved by varying a volume at constant mass.

This makes it possible to envisage *a priori* enhanced system reliability and lifetime. In effect, it is possible to employ elements made of flexible materials which suffer less from corrosion. This directly employs Archimedes's principle.

According to an example, but not the invention, each ballast includes a sealed and non-compressible reserve vessel or tank having an orifice adapted to receive the entrance of an external variable-volume balloon-like member.

This characteristic makes it possible to employ the volume of the sealed tank for carrying the various elements making it possible to inflate and deflate the external variable-volume balloon-like member.

As an example, but not the invention, the volume of the external balloon-like member is modified by means of a motor-driven movement of a piston movable within the tank and dividing the tank into two chambers: the first chamber being filled with a compressible gas and including the motor and the second chamber being filled with a non-compressible fluid, this second chamber being in communication, via the orifice of the tank, with the external variable-volume balloon-like member also filled with a non-compressible fluid.

In this particularly simple example, the piston installed in the tank and slidable therein pushes the non-compressible fluid towards the-balloon like member and, conversely, allows the non-compressible fluid to return to the tank as soon as the piston is driven in the opposite direction, thereby deflating the variable-volume balloon-like member.

In practice, the piston is advantageously driven via a threaded rod driven in rotation by the motor and engaging in a threaded hole provided in the piston.

This particularly simple implementation makes it possible to locate the motor in the tank chamber where the compressible gas is located, thereby avoiding any problem of corroding or immersing the motor.

In the invention, the tank is filled with compressible gas and includes an internal balloon-like member also of variable-volume in communication, via a pump, with the entrance to the external balloon-like member also filled with non-compressible fluid, modification of the volume of the external balloon-like member being achieved by displacement of non-compressible fluid between the internal balloon-like member and the external balloon-like member using the pump.

In the invention, the two balloon-like members are linked via the pump operation of which causes non-compressible fluid to pass from the internal balloon-like member to do the external one, and vice versa.

Considering the internal balloon-like member is incorporated into the tank which does not change volume thanks to the presence of the compressible gas, the volume of the ballast constituted by the tank and the variable-volume balloon-like member makes it possible to modify overall ballast buoyancy.

In a particular embodiment, the internal balloon-like member is set at a reduced pressure whereby transfer of non-compressible fluid from the external balloon-like member to the internal balloon-like member takes place by direct induction upon opening a valve between the external balloon-like member and the internal balloon-like member.

This avoids having to start the pump up for transferring non-compressible fluid from the internal balloon-like member to the external balloon-like member and vice versa. This is consequently an energy-saving measure allowing the pump to operate less frequently with a corresponding increase in pump life.

According to one advantageous characteristic, a pressure sensor is installed at each ballast.

Such an implementation makes it possible to simultaneously install the ballast and its controls, and the pressure sensors. To carry out the invention, one or more pressure sensors may be located in the proximity of each ballast be linked to the latter so that the ballast can be aware of the immersion depth. This implementation is the most simple, as it avoids multiplying the points of installation of the equipment necessary to the invention on the seismic streamer.

Similarly and advantageously, a microcontroller is incorporated at each ballast.

Advantageously, the instruction receiver includes at least one radio receiver carried by a buoy and linked to the distribution bus.

The use of such a surface radio receiver makes it possible for the vessel carrying the sonic source installed in the proximity of the seismic streamers to send desired depth instructions to the seismic streamer and consequently to the ballasts. Here again, the simplicity of implementation of measurement using the invention and, consequently, its value from a practical point of view will be seen.

Advantageously, the interval between two ballasts is comprised between 100 and 400 m, and more preferably between 200 and 300 m.

This characteristic ensures good buoyancy control of seismic streamers in view of their length and other mechanical characteristics.

According to one advantageous characteristic of the invention, each ballast is associated with electrical or hydraulic energy accumulating means.

This characteristic allows each ballast to have reserve energy for ballasting to cause the streamer to rise to the surface, in particular in the event of a power failure.

The energy accumulating means can be an electrical chargeable energy source charged via the power supply network, for example a capacitance or a battery, or yet again a hydraulic energy accumulator charged with energy using a pump incorporated into the ballast or by autonomous energy recovery upon decrease of buoyancy of an associated ballast during operation thereof.

In the case of rechargeable electrical storage means, charging can be done when the ballast is passive via the power supply network when little demands are made on it by the immersion depth maintaining apparatus. In this case, it is possible to envisage taking energy from this stored energy source on each occasion when buoyancy is to be changed, and without making demands on the streamer power supply network.

The hydraulic source of stored energy can be based on generation of a volume of compressed air.

According to preferred characteristic of the invention, the apparatus is adapted to control immersion and lateral positioning by associating ballasts with thruster modules, each thruster module comprising at least two thruster elements designed to generate radial forces in distinct directions and being connected to a streamer orientation measuring unit for adjusting operation of the streamer elements so that the streamer adopts a desired position.

This association of ballasts and thruster modules provides for overall control of streamer position. Combined use of a ballast and a thruster makes it possible to optimize power consumption by the apparatus for maintaining immersion depth according to the invention while simultaneously ensuring streamer vertical and lateral positioning, this lateral positioning being able to be notably employed for maintaining a constant spacing between two streamers.

In effect, in order to maintain a vertical force, a thruster requires to operate permanently which is not the case with ballasts which make it possible to establish a constant vertical force without having to supply energy. Thus, if the thrusters were used alone, they would require more power than the streamer power supply would have been able to provide. In parallel, the use alone of the ballasts would not make vertical and lateral control of streamer position possible.

Advantageously, each thruster module comprises three thruster elements distributed around a streamer.

This characteristic provides optimum control of streamer position about an equilibrium position. It is in particular possible to employ a vertical thruster element and two lateral thruster elements. Advantageously, according to the invention, the thruster elements are distributed at 120° with respect to each other.

Also, according to a preferred characteristic of the invention, the ballasts and thruster modules are associated in a manner whereby control of the ballasts makes it possible to position the streamer at a desired immersion depth and the thruster modules are controlled in order to compensate for oscillations about the desired immersion depth.

This characteristic makes it possible to optimize power consumed by the control apparatus according to the invention, while ensuring that the streamer can be correctly positioned.

The invention provides a variable buoyancy ballast according to claim 1, which is adapted to be connected to a power supply network of a seismic streamer and to an instruction distribution bus for receiving a control signal, the ballast being such that variation of buoyancy is achieved by varying a volume at constant mass, the ballast including a sealed and non-compressible tank having an orifice designed to receive the entrance to an external balloon-like member of variable volume, the ballast being characterized in that the tank is filled with compressible gas and includes an internal balloon-like member also of variable-volume in communication, via a pump, with the entrance to the external balloon-like member also filled with non-compressible fluid, modification of the volume of the external balloon-like member being achieved by displacement of non-compressible fluid between the internal balloon-like member and the external balloon-like member using the pump.

Such a ballast is one constituent of the control apparatus according to the invention.

The invention also provides a method according to claim 13 for controlling a seismic streamer in immersion designed to modify and maintain depth of immersion of the streamer, characterized in that, with the streamer being adapted for stationary use and including an electrical energy power supply network, the method comprises the steps of:
- installing, regularly along the seismic streamer, a plurality of variable buoyancy ballasts each associated with a microcontroller;
- connecting the ballasts to the electrical power supply network of the streamer;
- installing a plurality of pressure sensors also regularly along the streamer;
- installing, on the streamer, at least one receiver for one or more instructions,
- installing an instruction distribution bus,
- connecting the distribution bus to the ballasts,
- receiving, using the microcontroller associated with a given ballasts, signals originating from at least one pressure sensor located in the proximity of the ballast and instruction signals originating from the receiver for one or more instructions;
- calculating, using the microprocessor, a control signal for modifying buoyancy of the ballast as a function of at least the signals received;
- transmitting this control signal at least to the corresponding ballast.

The method further includes modifying ballast buoyancy under the control of the control signal.

The step of modifying ballast buoyancy under the control of the control signal can be achieved by causing a mass at constant volume to vary, this variation being advantageously achieved by varying the relative volumes of two chambers formed in a tank of constant volume, one chamber ring previously filled with a compressible gas and the other chamber being in communication with the water outside the tank.

The step of modifying ballast buoyancy commanded by the control signal can also be achieved by causing a volume at constant mass to vary.

Advantageously, each ballast will then be provided with a sealed and non-compressible tank having an orifice designed to receive the entrance to an external variable-volume balloon-like member.

The modification step can then be such that the volume of the external balloon-like member is modified using the driven of a piston movable in the tank and dividing it into two chambers; the first chamber being filled with a compressible gas and including the motor, and the second chamber being filled with a non-compressible fluid, this second chamber being in communication, via the tank orifice, with the external variable-volume balloon-like member also filled with a non-compressible fluid.

It can also be such that, the tank being filled in advance with compressible gas and being provided with an internal balloon-like member also of variable volume, communicating, via a pump, with the entrance to the external balloon-like member also filled with non-compressible fluid, modification of the volume of the external balloon-like member is achieved by displacement of non-compressible fluid between the internal balloon-like member and the external balloon-like member using the pump.

Advantageously, the method comprises a step of charging an electrical or hydraulic energy storage means.

The method then advantageously includes a step of detecting an electrical power network failure followed by a step of initiating, upon failure detection, in emergency ballasting performed thanks to the energy accumulated in the storage means.

Advantageously, the method being designed to control immersion and lateral position, the method includes the step of associating the ballasts with thruster modules, each thruster module comprising at least two thruster elements designed to generate radial forces in distinct directions, a step of acquisition of measurement of orientation of the streamer, and a step of adjusting thruster element operation as a function of measurement of orientation and signals originating from the pressure sensor, so that the streamer adopts the desired position.

Advantageously, the step of associating the ballasts and thruster modules and the step of adjusting thruster module operation are such that ballast control enables the streamer to be positioned at a desired immersion depth, and the thruster modules are controlled to compensate for oscillations about the desired immersion depth.

Thus, according to a preferred characteristic, with the ballasts being additionally associated with thruster modules, each thruster module comprising at least two thruster elements designed to generate radial forces in distinct directions and being linked to a unit for measuring streamer orientation, in order to adjust operation of the thruster elements so that the streamer adopts a desired position, the method including a supplementary step of calculating a control signal for modifying thrust of the associated thruster module as a function of at least the signals received, and an additional step of transmitting this control signal at least to the corresponding thruster module.

According to one embodiment, each ballast includes a sealed and non-compressible tank having an orifice designed to receive the entrance to an external variable-volume balloon-like member and wherein each ballast is arranged whereby the tank is filled with compressible gas and includes an internal balloon-like member also of variable-volume in communication, via a pump, with the entrance to the external balloon-like member also filled with non-compressible fluid.

According to the invention, the method includes, upon reception of the control signal by the ballast, modifying buoyancy of the ballast by varying a volume at constant mass by modification of the volume of the external balloon-like member by displacement of non-compressible fluid between the internal balloon-like member and the external balloon-like member using the pump

### BRIEF DESCRIPTION OF THE DRAWINGS

Further characteristics and advantages of the present invention will become more clear from the description below with reference to the attached drawings illustrating an example of an embodiment which is not to be considered as limiting. In the drawings:
FIG. 1 is a diagrammatic view of a seismic streamer according to the invention;
FIG. 2 illustrates diagrammatically the context in which a seismic streamer such as that shown in FIG. 1 is employed;
FIG. 3 illustrates the principle on the basis of an example, which is not the invention;
FIG. 4 represents the principle on the basis of another example, which is not the invention;
FIG. 5 represents another example which is not the invention;
FIG. 6 shows the invention;
FIG. 7 shows an example of a thruster module suitable for implementation in the apparatus of the invention;
FIG. 8 shows diagrammatically proportional-integral-derivative control of local streamer depth.

### DETAILED DESCRIPTION OF PREFERRED EMBODIMENTS

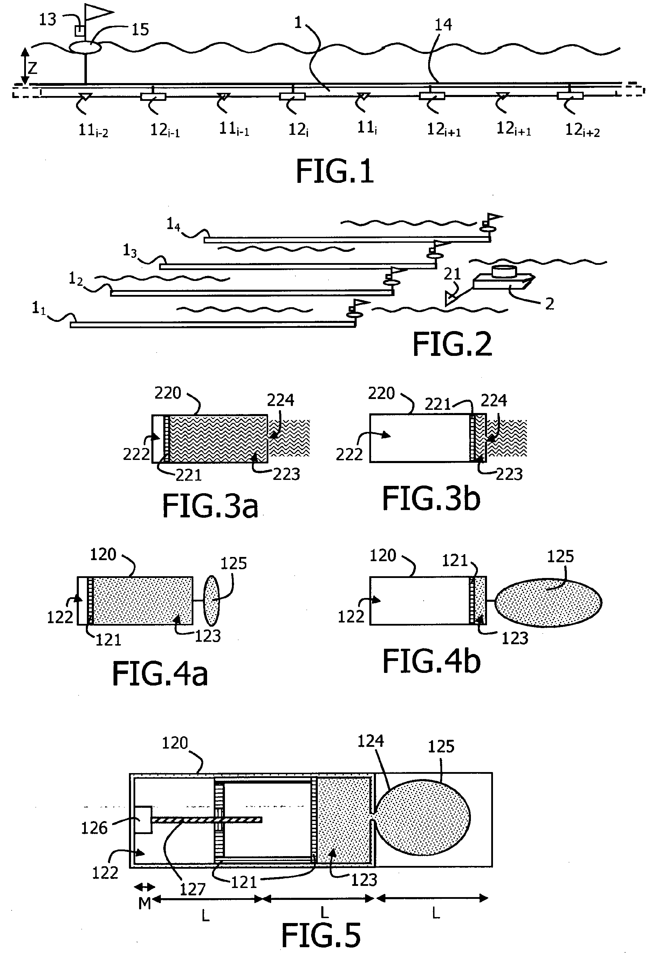

FIG. 1 shows a seismic streamer 1 in which a certain number of seismic sensors 11i are distributed along the seismic streamer at regular intervals. The seismic streamer 1 includes immersion control apparatus according to the invention. Thus, a plurality of ballasts 12i are fixed at regular intervals along-streamer 1.

On FIG. 1, the ballasts 12i and the seismic sensors are arranged alternately. Nevertheless, it is possible to provide a system in which the transponder and the ballast are fastened at the same place on the seismic streamer. This allows more rapid preparation of the streamer 1 which is fitted out simultaneously with a transponder and the ballast, optionally incorporated into the same unit of equipment. It will be observed that several seismic sensors can be placed between two ballasts.

All of the ballasts 12i are connected to a receiver for instructions 13 via an instruction distribution bus 14 designed to distribute instructions among the ballasts 12. Advantageously, the receiver for instructions 13 is placed above a buoy 15 ensuring that the receiver for instructions 13 will be at the surface.

FIG. 2 shows one possible context in which four seismic streamers 1₁ to 1₄ according to the invention are employed. These streamers 1₁ to 1₄ are wound out prior to performing the measurement study and detached from the vessel which has deposited them at a position between the surface and the sea bed.

Thanks to the invention, these seismic streamers 1₁ to 1₄ are advantageously autonomous as regards control of their immersion, in particular floating below the surface. They are designed to be employed in combination with a sonic source 21 carried on a small vessel 2. It is in no way necessary nor useful for vessel 2 to include equipment for casting or recovering the streamers and even less for drawing them.

It will be seen that this context of stationary use makes it possible to multiply study zones with one single and the same vessel distributing the seismic streamers as soon as a fleet of several small vessels carrying a sonic source is available.

FIG. 3 shows the principle of an example, which is not the invention.

The ballast 12 is constituted by a container or tank 220 divided into two chambers by a piston 221 designed to the move in order to vary the buoyancy of ballast 12.

Piston 221 consequently separates the tank into two chambers: a chamber 222 filled with a compressible gas and a further chamber 223 having an opening 224 to the outside. With this opening, seawater can come and fill chamber 223.

Depending on the position of piston 221, the same volume constituted by tank 220 will have a differing mass. One can consequently cause overall buoyancy to vary.

Thus, on FIG. 3a, the compressible gas is highly compressed in chamber 222, which is highly reduced in volume, with seawater filling chamber 223 which practically constitutes the whole of tank 220.

In FIG. 3b, buoyancy is on the other hand increased since a large part of the seawater has been driven out to the outside via orifice 224 and compressible gas filled chamber 222 now constitutes practically the whole of the volume of tank 220.

Displacement of piston 221 can be performed using a motor arranged in chamber 222 in which the compressible gas is located. In effect, this chamber is the best preserved from external aggression.

This solution does however involve internal corrosion effects in the part of the tank which is alternatively in contact with the compressible gas and with seawater. Nevertheless, it has the advantage of only necessitating one single fixed volume, that of the tank, to perform buoyancy control.

It can finally be observed that this example can also be implemented using a pump which would pump seawater between the inside of the tank and outside. The piston would then be driven by the action of the water. In this implementation, it can also be envisaged to introduce into the tank a casing of an extensible material containing compressed gas and forming the chamber 221. This casing would change in volume under the action of the seawater pumped, allowing the volume of chamber 222 to change, as illustrated in FIG. 3b.

FIG. 4 shows the principle of another example, which is not the invention. In this embodiment, buoyancy is achieved by varying a volume at constant mass.

To achieve this, each ballast includes a sealed and non-compressible tank 120 fitted with an orifice 124 designed to receive the entry to an external variable-volume balloon-like member 125.

The volume of the external balloon-like member 125 is modified through displacement of a non-compressible fluid between an internal chamber 123 of the sealed and non-compressible tank 120 and the variable-volume external balloon-like member 125.

The possibility of displacing the non-compressible fluid present in the tank is ensured by the presence of a compressible gas in a further chamber 122 of the tank 120, isolated from chamber 123. There are several manners of implementing the principle illustrated in FIG. 4.

FIG. 5 shows another example which is not the invention. Tank 120 includes a motor-driven piston 121 driven by a motor 126 via a threaded rod 127 driven in rotation by the motor and meshing with a member 121a which is also threaded.

The motor consequently makes it possible to drive piston 121 in order to modify the sizes of the chambers 122 and 123. When it shifts, piston 121 pushes the non-compressible fluid contained in chamber 123 towards the external balloon-like member 125 via the orifice 124 directly connected to chamber 123.

It will thus be understood that the total volume of the ballast can be modified thereby allowing the depth of immersion of the seismic streamer to be controlled.

This implementation is efficacious, has good reliability and has the advantage of being simple to produce and maintain.

Nevertheless, the overall length of the ballast needs to be relatively large in order to be functional and, in order to obtain the desired buoyancy intervals, such a ballast requires to measure around 1 meter.

It is also known that the force needing to be applied to the piston to drive it corresponds to the force applied by the external pressure on the cross-section of the piston. Such a force implies that the mechanism implemented needs to be extremely solid. This implies appropriate dimensioning in order to obtain good operating reliability.

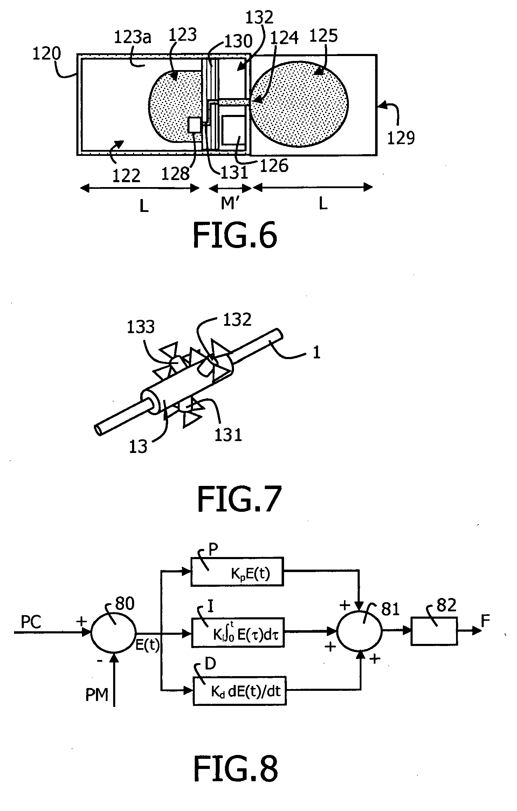

FIG. 6 shows the invention. In this implementation, a piston is not used. In its place, an internal variable-volume balloon-like member 123a is employed as the practical implementation of chamber 123. Chamber 122 containing the compressible gas is bounded by the tank 120. Circulation of non-compressible fluid from the internal balloon-like member 123a towards the external balloon-like member 125 is handled by a pump 128 driven by a motor 126 located inside tank 120. Pump 128 consequently causes the non-compressible fluid to circulate between the inner balloon-like member 123a and the external balloon-like member 125 through a conduit 131 formed in a wall 130 and connected to an orifice 124 of tank 120 open to the inside of external balloon-like member 125.

Advantageously, the motor 126 is located in a region 132 created inside tank 120 making use of a wall 130 which prevents contact of internal balloon-like member 123a with the motor 126. The region 132 also contains a compressible gas making it thus possible to implement the motor without it being damaged.

Advantageously, the external balloon-like member 125 is protected by a cage 129 preventing its deterioration through contact with solid elements in the medium or with animal life.

The advantage of the implementation shown in FIG. 6 is that of diminishing the weight and size of the ballasts. As against this, this system is slightly less efficacious than the system shown in FIG. 5. Nevertheless, account should be taken of the fact that delivery of power to the pump 128 is solely in operation over brief intervals of time, as what is involved is depth correction. Thus, mean power consumption will remain relatively small. Optionally, capacitive elements can be employed if the cable elements including the distributor are thus not able to handle the currents employed for operating the ballasts.

It is always possible to employ a pump having higher capacity. This will have the effect of linearly increasing power and throughput. Nevertheless, the choice should be made as regards pump capacity in order to maximize throughput without overloading the power supply line.

The main advantages of the use of a ballast are that of minimum power consumption since power is only required in order to vary vertical force. No power is required in order to maintain this vertical force constant.

The use of ballasts also makes it possible to avoid the presence of moving elements around the streamer. This also makes it possible to limit acoustic noise since the system solely operates to produce a variation in force and is completely silent as soon as it is a matter of maintaining this force constant.

Nevertheless, if lateral control is required, it will be necessary to add a further control means, in addition to the ballasts, making it possible to generate at least one horizontal force.

In particular, according to one preferred characteristic of the invention, the ballasts are associated with thruster modules each comprising at least two thruster elements making it possible to generate radial forces along distinct directions.

FIG. 7 shows one example of a thruster module 13 able to be implemented in the control apparatus of the invention, on a streamer 1. The thruster module here comprises three thruster elements 131, 132 and 133 radially mounted at 120° with respect to each other around the streamer 1. The thruster elements can for example each be constituted by a tube in which a propeller associated with a motor is arranged. These elements 131, 132, 133 make it possible to supplement the force generated by the ballasts when there is a need for lateral positioning or yet again when there is a need for compensating oscillation about an equilibrium position provided at the desired depth by the ballasts or ballasts associated with the thruster module 13.

Operation of this thruster module 13 requires acquisition of a measurement of the orientation of streamer 1 to deal with rotational effects of streamer 1. Thus, provision is made in the apparatus according to the invention for the inclusion of inclination measuring meters to supply a thrust reference to the vertical for the thrusters.

The use of ballasts for generating a vertical force implies that the volume of these ballasts be proportional to the required force. Generally speaking, the volume in liters is approximately equal to twice the force in kilograms. This generally results in ballasts of significant size to obtain significant forces.

It is generally accepted that the maximum operating depth of a seismic streamer is of the order of from 0 to 300 m, resulting in an outside pressure of from 0 to 30 bars.

We have seen that the required vertical force should vary between 5 and -5 kg in water if the total useful volume to be transferred is equal to 10 L for a total system weight of 5 kg. In the case where an external balloon-like member is employed, it is necessary for the volume to be located externally of the tank. In this case, with an external balloon-like member 125 of length L, this configuration will result in a tank 120 having an approximate length of 2*L to allow the movement of the piston 121 to which it is necessary to add the length, we call M, of the mechanism for operating the actuating elements of the ballasts, in other words the piston and motor. By adding the size of the external balloon-like member 125 and that of the tank 120, we obtain a length of the order of a meter.

In the case where a pump is employed with the implementation in FIG. 6, the useful length is two lengths L of the external balloon-like member to which there should be added the length, we call M' of motor 126 and the wall 130.

Concerning depth control, the presence of the pressure sensors makes it possible to do a conversion into depth from the signals output by these pressure sensors. This calculation is performed within each microcontroller associated with each ballast for enabling the apparatus to know exactly the depth at which it is locally situated. The vertical force is then automatically adjusted by a controller in order to produce a convergence towards the desired depth received from the receiver for desired value instructions and program in the microcontroller.

Such control can be readily implemented using a proportional-integral-derivative (PID) control running in a very low power microcontroller.

FIG. 8 gives an overview of the use of PID control starting out from a desired depth PC compared with a measured depth PM using a subtractor 80. PM is measured by means of a pressure sensor close to the ballast. According to the principles of PID control, an error E(t) is calculated by the subtractor at every instant by supplying a difference between the desired depth PC and the measured depth PM. The error E(t) is used in three separate calculations each leading to determination of one correction component: a proportional component P, an integral component I and a derivative component D. The set of components is then summed in a summing circuit 81. The sum obtained is employed in a calculations step 82 for the force F to be applied in order to correct the error E(t) concerned.

It should be noted that the application of a force to point on the seismic streamer may influence the position of the other ballasts in the presence of significant dynamics, but this is rarely the case.

Thus, each ballast can be left under individual control, thereby simplifying overall system design. We will stress here that the ballasts can also be commanded independently of each other using a common instruction or separate instructions.

It can also be useful to synchronize immersion control over the set of ballasts. Such synchronization can also be required to reasons of power consumption. In effect, in order to reduce instantaneous power transmitted along the seismic streamer, the ballasts can be programmed to operate at different time intervals.

Finally, it can be envisaged to integrate acoustic positioning equipment into the ballasts according to the invention.

Finally, it will be noted that the operation of the thruster modules for controlling the lateral position and/or the position about an equilibrium position of the streamer is also advantageously governed by a PID feedback control.

## Claims

1. A variable buoyancy ballast (12) for seismic streamer control in immersion adapted to modify and maintain immersion depth of the streamer, adapted to be connected to a power supply network of a seismic streamer and to an instruction distribution bus for receiving a control signal, with the streamer being adapted for stationary use, and to an instruction distribution bus for receiving a control signal, the ballast being arranged such that variation of buoyancy is achieved by varying a volume at constant mass, the ballast including a sealed and non-compressible tank (120) having an orifice (124) designed to receive the entrance to an external balloon-like member (125) of variable volume, wherein the tank is filled with compressible gas and includes an internal balloon-like member (123a) filled with non-compressible fluid and of variable-volume and in communication, via a pump (128), with the entrance to the external balloon-like member, which is also filled with non-compressible fluid, the ballast being arranged so that modification of the volume of the external balloon-like member is achieved by displacement of the non-compressible fluid between the internal balloon-like member and the external balloon-like member using the pump.

2. The ballast according to claim 1, **characterized in that** the internal balloon-like member is set at a reduced pressure whereby transfer of non-compressible fluid from the external balloon-like member to the internal balloon-like member takes place by direct induction upon opening a valve between the external balloon-like member and the internal balloon-like member.

3. Apparatus (1) for seismic streamer control in immersion adapted to modify and maintain immersion depth of the streamer, wherein, with the streamer being adapted for stationary use and including a power supply network, the immersion control apparatus comprises a plurality of variable buoyancy ballasts (12i) according to any of claims 1 to 2 connected to the power supply network of the streamer and installed at regular intervals along the seismic streamer and each associated with a microcontroller, a plurality of pressure sensors (11i) also installed at regular intervals along the streamer, at least one receiver for one or more desired value instructions, a bus (14) for distributing the one or more desired value instructions to the ballasts, the microcontroller associated with a given ballasts being adapted to receive at least signals originating from at least one pressure sensor located in the proximity of the ballast and desired value instruction signals originating from the receiver for instructions, being adapted to calculate a control signal for modifying the buoyancy of the ballast as a function of at least the signals received and being adapted to send this control signal at the least to the corresponding ballast.

4. The control apparatus according to claim 3, **characterized in that** a pressure sensor is incorporated at each ballast.

5. The control apparatus according to claim 3 or 4, **characterized in that** a microcontroller is incorporated at each ballast.

6. The control apparatus according to any one of claims 3 to 5, **characterized in that** the interval between two ballasts is comprised between 100 and 400 m.

7. The control apparatus according to any one of claims 3 to 6, **characterized in that** each ballast is associated with electrical or hydraulic energy accumulating means.

8. The control apparatus according to claim 7, **characterized in that** the energy accumulating means is an electrical chargeable energy source charged via the power supply network.

9. The control apparatus according to claim 8, **characterized in that** the energy accumulating means is a hydraulic energy accumulator charged with energy using a pump incorporated into the ballast or by energy recovery upon decrease of buoyancy of an associated ballast.

10. The control apparatus according to one of claims 3 to 9, **characterized in that** it is adapted to control immersion and lateral positioning by associating ballasts with thruster modules, each thruster module comprising at least two thruster elements designed to generate radial forces in distinct directions and being connected to a streamer orientation measuring unit for adjusting operation of the streamer elements so that the streamer adopts a desired position.

11. The control apparatus according to claim 10, **characterized in that** each thruster module comprises three thruster elements distributed around a streamer.

12. The control apparatus according to one of claims 10 and 11, **characterized in that** the ballasts and thruster modules are associated in a manner whereby control of the ballasts makes it possible to position the streamer at a desired immersion depth and the thruster modules are controlled in order to compensate for oscillations about the desired immersion depth.

13. A method for controlling a seismic streamer in immersion designed to modify and maintain depth of immersion of the streamer, **characterized in that**, with the streamer being adapted for stationary use and including an electrical energy power supply network, the method comprises the steps of:
- installing, regularly along the seismic streamer, a plurality of variable buoyancy ballasts each associated with a microcontroller;
- connecting the ballasts to the electrical power supply network of the streamer;
- installing a plurality of pressure sensors also regularly along the streamer;
- installing, on the streamer, at least one receiver for one or more instructions,
- installing an instruction distribution bus,
- connecting the distribution bus to the ballasts,
- receiving, using the microcontroller associated with a given ballasts, signals originating from at least one pressure sensor located in the proximity of the ballast and desired value instruction signals originating from the receiver for instructions;
- calculating, using the microprocessor, a control signal for modifying buoyancy of the ballast as a function of at least the signals received;
- transmitting this control signal at least to the corresponding ballast,
in which each ballast is such that variation of buoyancy is achieved by varying a volume at constant mass, the ballast including a sealed and non-compressible tank having an orifice designed to receive the entrance to an external balloon-like member of variable volume,
wherein each ballast is arranged such that the tank is filled with compressible gas and includes an internal ballon-like member filled with non-compressible fluid and of variable-volume and in communication, via a pump, with the entrance to the external balloon-like member, which is also filled with non-compressible fluid.

14. The method according to claim 13, further including, upon reception of the control signal by the ballast, modifying buoyancy of the ballast by varying a volume at constant mass by modification of the volume of the external balloon-like member by displacement of non-compressible fluid between the internal balloon-like member and the external balloon-like member using the pump

15. The control method according to one of claims 13 to 14, **characterized in that** with the ballasts being additionally associated with thruster modules, each thruster module comprising at least two thruster elements designed to generate radial forces in distinct directions and being linked to a unit the measuring streamer orientation, in order to adjust operation of the thruster elements so that the streamer adopts a desired position, the method including a supplementary step of calculating a control signal for modifying thrust of the associated thruster module as a function of at least the signals received, and an additional step of transmitting this control signal at least to the corresponding thruster module.

## Patentansprüche

1. Ballastkörper (12) mit variablem Auftrieb für die Steuerung eines seismischen Streamers beim Tauchen, der zur Veränderung und Aufrechterhaltung der Tauchtiefe des Streamers geeignet ist, der geeignet ist, an ein Stromversorgungsnetz eines seismischen Streamers und an einen Anweisungsverteilungsbus für den Empfang eines Steuersignals angeschlossen zu werden, wobei der Streamer an einen stationären Einsatz und an einen Anweisungsverteilungsbus zum Empfang eines Steuersignals angepasst ist, wobei der Ballastkörper derart eingerichtet ist, dass die Veränderung des Auftriebs durch Verändern eines Volumens bei konstanter Masse erreicht wird, wobei der Ballastkörper einen abgedichteten und nicht zusammendrückbaren Tank (120) umfasst, der eine Öffnung (124) aufweist, die ausgebildet ist, den Eingang zu einem äußeren ballonähnlichen Bauteil (125) von veränderlichem Volumen aufzunehmen, wobei der Tank mit einem kompressiblen Gas gefüllt ist und ein inneres ballonähnliches Bauteil (123a) enthält, das mit einem inkompressiblen Fluid gefüllt ist und das ein veränderliches Volumen aufweist und über eine Pumpe (128) mit dem Eingang des äußeren ballonähnlichen Bauteils in Verbindung steht, das auch mit inkompressiblem Fluid gefüllt ist, wobei der Ballastkörper so eingerichtet ist, dass die Änderung des Volumens des äußeren ballonähnlichen Bauteils erreicht wird durch das Verschieben des inkompressiblen Fluids zwischen dem inneren ballonähnlichen Bauteil und dem äußeren ballonähnlichen Bauteil unter Verwendung der Pumpe.

2. Ballastkörper nach Anspruch 1, **dadurch gekennzeichnet, dass** das innere ballonähnliche Bauteil bei einem verringerten Druck eingesetzt wird, wodurch die Übertragung des inkompressiblen Fluids aus dem äußeren ballonähnlichen Bauteil in das innere ballonähnliche Bauteil durch unmittelbares Ansaugen beim Öffnen eines Ventils zwischen dem äußeren ballonähnlichen Bauteil in dem inneren ballonähnlichen Bauteil stattfindet.

3. Vorrichtung (1) für die Steuerung eines seismischen Streamers beim Tauchen, die geeignet ist, die Tauchtiefe des Streamers zu verändern und aufrechtzuerhalten, wobei die Tauchsteuerungsvorrichtung mit dem Streamer, der für den stationären Betrieb geeignet ist und ein Stromversorgungsnetz enthält, umfasst: mehrere Ballastkörper mit veränderlichem Auftrieb (12i) nach einem der Ansprüche 1 bis 2, die an das Stromversorgungsnetz des Streamers angeschlossen und in regelmäßigen Abständen entlang des seismischen Streamers eingerichtet sind und die jeweils mit einem Mikrokontroller verbunden sind; mehrere Drucksensoren (11i), die ebenfalls in regelmäßigen Abständen entlang des seismischen Streamers eingerichtet sind; mindestens einen Empfänger für eine oder mehrere Sollwertanweisungen; einen Bus (14) zum Verteilen der einen oder mehreren Sollwertanweisungen an die Ballastkörper, wobei der Mikrokontroller, der mit einem gegebenen Ballastkörper verbunden ist, geeignet ist, mindestens Signale, die von dem mindestens einen in der Nähe des Ballastkörpers angeordneten Drucksensor stammen, und Sollwertanweisungssignale, die von dem Empfänger für die Anweisungen stammen, entgegenzunehmen, wobei er geeignet ist, ein Steuersignal für die Veränderung des Auftriebs des Ballastkörpers als eine Funktion mindestens der empfangenen Signale zu berechnen, und geeignet ist, dieses Steuersignal zumindest dem entsprechenden Ballastkörper zuzusenden.

4. Steuervorrichtung nach Anspruch 3, **dadurch gekennzeichnet, dass** in jedem Ballastkörper ein Drucksensor eingebaut ist.

5. Steuervorrichtung nach Anspruch 3 oder 4, **dadurch gekennzeichnet, dass** in jedem Ballastkörper ein Mikrokontroller eingebaut ist

6. Steuervorrichtung nach einem der Ansprüche 3 bis 5, **dadurch gekennzeichnet, dass** der Abstand zwischen zwei Ballastkörpern zwischen 100 und 400 m liegt.

7. Steuervorrichtung nach einem der Ansprüche 3 bis 6, **dadurch gekennzeichnet, dass** jeder Ballastkörper mit elektrischen oder hydraulischen Energiespeichermitteln verbunden ist.

8. Steuervorrichtung nach Anspruch 7, **dadurch gekennzeichnet, dass** die Energiespeichermittel eine elektrisch aufladbare Energiequelle sind, die über das Stromversorgungsnetz aufgeladen wird.

9. Steuervorrichtung nach Anspruch 8, **dadurch gekennzeichnet, dass** die Energiespeichermittel ein hydraulischer Energiespeicher sind, der unter Verwendung einer Pumpe, die in den Ballastkörper eingebaut ist, oder über die Energierückgewinnung bei der Abnahme des Auftriebs eines zugehörigen Ballastkörpers mit Energie aufgeladen wird.

10. Steuervorrichtung nach einem der Ansprüche 3 bis 9, **dadurch gekennzeichnet, dass** sie geeignet ist, das Eintauchen und das seitliche Positionieren zu steuern, indem den Ballastkörpern Schubdüsenmodule zugeordnet werden, wobei jedes Schubdüsenmodul mindestens zwei Schubdüsenelemente aufweist, die ausgelegt sind, radiale Kräfte in verschiedene Richtungen zu erzeugen, und die an eine Streamer-Orientierungsmesseinheit angeschlossen sind, um den Betrieb der Streamerelemente so anzupassen, dass der Streamer eine Sollposition annimmt.

11. Steuervorrichtung nach Anspruch 10, **dadurch gekennzeichnet, dass** jedes Schubdüsenmodul drei Schubdüsenelemente aufweist, die um einen Streamer herum verteilt sind.

12. Steuervorrichtung nach einem der Ansprüche 10 und 11, **dadurch gekennzeichnet, dass** die Ballastkörper und Schubdüsenmodule in einer Weise angeschlossen sind, wodurch es der Steuerung der Ballastkörper ermöglicht wird, den Streamer bei einer Solltauchtiefe zu positionieren, und die Schubdüsenmodule gesteuert werden, um Schwingungen um die Solltauchtiefe herum auszugleichen.

13. Verfahren zur Steuerung eines seismischen Streamers beim Tauchen, der zur Veränderung und Aufrechterhaltung der Tauchtiefe des Streamers ausgelegt ist, **dadurch gekennzeichnet, dass** das Verfahren mit dem Streamer, der für den stationären Einsatz geeignet ist und ein Elektroenergieversorgungsnetz enthält, die Schritte umfasst zum:
- Einrichten von mehreren Ballastkörpern mit variablem Auftrieb, von denen jeder mit einem Mikrokontroller verbunden ist, gleichmäßig entlang des seismischen Streamers;
- Anschließen der Ballastkörper an das Elektroenergieversorgungsnetz des Streamers;
- Einrichten mehrerer Drucksensoren ebenfalls gleichmäßig entlang des Streamers;
- Einrichten mindestens eines Empfängers für eine oder mehrere Anweisungen auf dem Streamer;
- Einrichten eines Anweisungsverteilungsbusses;
- Anschließen des Verteilungsbusses an die Ballastkörper;
- Empfangen von Signalen, die von mindestens einem Drucksensor stammen, der in der Nähe des Ballastkörpers angeordnet ist, und von Sollwertanweisungssignalen, die aus dem Empfänger für die Anweisungen stammen, unter Verwendung des Mikroprozessors, der mit einem gegebenen Ballastkörper verbunden ist;
- Berechnen eines Steuersignals für die Veränderung des Auftriebs des Ballastkörpers als eine Funktion mindestens der empfangenen Signale unter Verwendung des Mikroprozessors;
- Senden dieses Steuersignals zumindest an den entsprechenden Ballastkörper ;
wobei jeder Ballastkörper derart ist, dass die Veränderung des Auftriebs durch eine Veränderung des Volumens bei konstanter Masse erreicht wird, wobei der Ballastkörper einen abgedichteten und nicht zusammendrückbaren Tank umfasst, der eine Öffnung aufweist, die ausgebildet ist, den Eingang zu einem äußeren ballonähnlichen Bauteil von veränderlichem Volumen aufzunehmen;
wobei jeder Ballastkörper derart eingerichtet ist, dass der Tank mit einem kompressiblen Gas gefüllt ist und ein inneres ballonähnliches Bauteil enthält, das mit einem inkompressiblen Fluid gefüllt ist und das ein veränderliches Volumen aufweist und über eine Pumpe mit dem Eingang des äußeren ballonähnlichen Bauteils in Verbindung steht, das auch mit inkompressiblem Fluid gefüllt ist.

14. Verfahren nach Anspruch 13, ferner umfassend, dass der Auftrieb des Ballastkörpers beim Empfang des Steuersignals durch den Ballastkörper mittels Veränderung eines Volumens bei konstanter Masse verändert wird, indem das Volumen des äußeren ballonähnlichen Bauteils durch Verschieben des inkompressiblen Fluids zwischen dem inneren ballonähnlichen Bauteil und dem äußeren ballonähnlichen Bauteil unter Verwendung der Pumpe verändert wird.

15. Steuerverfahren nach einem der Ansprüche 13 bis 14, **dadurch gekennzeichnet, dass** das Verfahren dann, wenn die Ballastkörper zusätzlich mit Schubdüsenmodulen verbunden sind, wobei jedes Schubdüsenmodul mindestens zwei Schubdüsenelemente aufweist, die ausgelegt sind, radiale Kräfte in verschiedenen Richtungen zu erzeugen, und die an eine Streamer-Orientierungsmesseinheit angeschlossen sind, um den Betrieb der Streamerelemente so anzupassen, dass der Streamer eine Sollposition annimmt, einen ergänzenden Schritt umfasst, um ein Steuersignal für die Veränderung des Schubs des zugehörigen Schubdüsenmoduls als eine Funktion mindestens der empfangenen Signale zu berechnen, und einen zusätzlichen Schritt, um dieses Steuersignal zumindest an das entsprechende Steuermodul zu senden.

## Revendications

1. Ballast à flottabilité variable (12) pour contrôle d'une flûte sismique en immersion apte à modifier et maintenir la profondeur d'immersion de la flûte, apte à être relié à un réseau d'alimentation d'une flûte sismique et à un bus distributeur de consigne pour recevoir un signal de commande, la flûte étant adaptée à un usage stationnaire, et à un bus distributeur de consigne pour recevoir un signal de commande, le ballast étant agencé tel que la modification de flottabilité est réalisée en faisant varier un volume à masse constante, le ballast comprenant un réservoir étanche et incompressible (120) présentant un orifice (124) dessiné pour recevoir l'entrée d'un membre formant ballon externe (125) à volume variable, dans lequel le réservoir est rempli de gaz compressible et comprend un membre formant ballon interne (123a) rempli de fluide non compressible et à volume variable et en communication, par l'intermédiaire d'une pompe (128), avec l'entrée du membre formant ballon externe, qui est également rempli de fluide non compressible, le ballast étant agencé de sorte que la modification de volume du membre formant ballon externe est réalisée par déplacement du fluide non compressible entre le membre formant ballon interne et le membre formant ballon externe grâce à la pompe.

2. Le ballast selon la revendication 1, **caractérisé en ce qu'**au membre formant ballon interne est imposée une pression réduite de sorte que le transfert de fluide non-compressible du membre formant ballon externe vers le membre formant ballon interne se fait par induction directe, suite à l'ouverture d'une valve entre le membre formant ballon externe et le membre formant ballon interne.

3. Dispositif (1) de contrôle d'une flûte sismique en immersion apte à modifier et maintenir la profondeur d'immersion de la flûte, tel que, la flûte étant adaptée à un usage stationnaire et comprenant un réseau d'alimentation en énergie, le dispositif de contrôle d'immersion comprend une pluralité de ballasts à flottabilité variable (12i) selon l'une quelconque des revendications 1 à 2, reliés au réseau d'alimentation de la flûte et installés à intervalles réguliers le long de la flûte sismique et associés chacun à un microcontrôleur, une pluralité de capteurs de pression (11i) également installés à intervalles réguliers le long de la flûte, au moins un récepteur d'une ou plusieurs consigne(s) de valeur, un bus (14) pour distribuer la une ou plusieurs consigne(s) vers les ballasts, le microcontrôleur associé à un ballast donné étant apte à recevoir au moins des signaux en provenance d'au moins un capteur de pression situé à proximité du ballast et des signaux de consigne de valeur en provenance du récepteur de consigne, étant apte à calculer un signal de commande pour modifier la flottabilité du ballast en fonction d'au moins les signaux reçus et étant apte à envoyer ce signal de commande au moins vers ce ballast.

4. Dispositif de contrôle selon la revendication 3, **caractérisé en ce qu'**un capteur de pression est intégré au niveau de chaque ballast.

5. Dispositif de contrôle selon la revendication 3 ou 4, **caractérisé en ce qu'**un microcontrôleur est intégré au niveau de chaque ballast.

6. Dispositif de contrôle selon l'une des revendications 3 à 5, **caractérisé en ce que** l'intervalle entre deux ballasts est compris entre 100 et 400 mètres.

7. Dispositif de contrôle selon l'une des revendications 3 à 6, **caractérisé en ce que** chaque ballast est associé à un accumulateur d'énergie électrique ou hydraulique.

8. Dispositif de contrôle selon la revendication 7, **caractérisé en ce que** l'accumulateur d'énergie est un accumulateur électrique chargé via le réseau d'alimentation.

9. Dispositif de contrôle selon la revendication 8, **caractérisé en ce que** l'accumulateur d'énergie est un accumulateur hydraulique chargé grâce à une pompe intégrée au ballast ou par récupération d'énergie lors d'une diminution de la flottabilité d'un ballast associé.

10. Dispositif de contrôle selon l'une des revendications 3 à 9, **caractérisé en ce qu'**il est apte à contrôler la position en immersion et en latéral, par association des ballasts avec des modules propulseur, chaque module propulseur comprenant au moins deux éléments propulseurs adaptés à générer des forces radiales de directions distinctes et étant relié à une unité de mesure d'orientation de la flûte pour ajuster le fonctionnement des éléments propulseurs pour que la flûte prenne la position souhaitée.

11. Dispositif de contrôle selon la revendication 10, **caractérisé en ce que** chaque module propulseur comprend trois éléments propulseurs répartis autour d'une flûte.

12. Dispositif de contrôle selon l'une des revendications 10 et 11, **caractérisé en ce que** l'association entre les ballasts et les modules propulseurs est telle que la commande des ballasts permet le positionnement de la flûte sur une profondeur d'immersion de consigne et les modules propulseurs sont commandés pour compenser les oscillations autour de la profondeur d'immersion de consigne.

13. Procédé de contrôle d'une flûte sismique en immersion adapté à modifier et maintenir la profondeur d'immersion de la flûte, **caractérisé en ce que**, la flûte étant adaptée à un usage stationnaire et comprenant un réseau d'alimentation en énergie, le procédé comprend les étapes suivantes :
- installation, régulièrement le long de la flûte sismique, d'une pluralité de ballasts à flottabilité variable associés chacun à un microcontrôleur ;
- connexion des ballasts au réseau d'alimentation de la flûte ;
- installation d'une pluralité de capteurs de pression également régulièrement le long de la flûte ;
- installation, sur la flûte, d'au moins un récepteur pour une ou plusieurs consigne(s),
- installation d'un bus distributeur de consigne,
- connexion du bus distributeur aux ballasts,
- réception, avec le microcontrôleur associé à un ballast donné, de signaux en provenance d'au moins un capteur de pression situé à proximité du ballast et de signaux de consigne de valeur désirée en provenance du récepteur de consigne ;
- calcul, par le microprocesseur, d'un signal de commande pour modifier la flottabilité du ballast en fonction d'au moins les signaux reçus ;
- émission de ce signal de commande au moins vers ce ballast,
dans lequel chaque ballast est tel que la modification de flottabilité est réalisée en faisant varier un volume à masse constante, ce ballast comprenant un réservoir étanche et incompressible présentant un orifice adapté à recevoir l'entrée d'un membre formant ballon externe à volume variable,
dans lequel chaque ballast est agencé de telle sorte que le réservoir est rempli de gaz compressible et comprend un membre formant ballon interne rempli de fluide non compressible à volume variable et en communication, par l'intermédiaire d'une pompe, avec l'entrée du membre formant ballon externe, qui est également rempli de fluide non compressible

14. Procédé selon la revendication 13, comprenant en outre, à réception du signal de commande par le ballast, la modification de flottabilité du ballast en faisant varier un volume à masse constante par modification de volume du ballon externe par déplacement du fluide non compressible entre le membre formant ballon interne et le membre formant ballon externe grâce à la pompe.

15. Procédé de contrôle selon l'un des revendications 13 à 14, **caractérisé en ce que**, les ballasts étant en outre associés à des modules propulseur, chaque module propulseur comprenant au moins deux éléments propulseurs adaptés à générer des forces radiales de directions distinctes et étant relié à une unité de mesure d'orientation de la flûte pour ajuster le fonctionnement des éléments propulseurs pour que la flûte prenne la position souhaitée, le procédé comprend une étape supplémentaire de calcul d'un signal de commande pour modifier la poussée du module propulseur associé en fonction d'au moins les signaux reçus et une étape additionnelle d'émission de ce signal de commande au moins vers ce module propulseur.
